Europäisches Patentamt

European Patent Office

Office européen des brevets

(11) Publication number: 0 370 965
A2

# EUROPEAN PATENT APPLICATION

(21) Application number: 89830483.7

(22) Date of filing: 07.11.89

(51) Int. Cl.5: G01S 13/93, G01S 13/62

(30) Priority: 23.11.88 IT 6804388

(43) Date of publication of application:
30.05.90 Bulletin 90/22

(84) Designated Contracting States:
AT BE CH DE ES FR GB GR IT LI LU NL SE

(71) Applicant: ELKRON S.p.A.
Via Tofane 33-35
I-10141 Torino(IT)

Applicant: AUTONIX S.R.L.
Via Don Caustico 123
I-10095 Grugliasco (Torino)(IT)

(72) Inventor: Bianco, Luigi
Corso Monte Cucco, 76/1
I-10141 Torino(IT)

(74) Representative: Bosotti, Luciano et al
c/o Jacobacci-Casetta & Perani S.p.A. Via
Alfieri, 17
I-10121 Torino(IT)

(54) A device for detecting relative movement between vehicles, mainly for preventing collisions.

(57) The device, which is intended to be associated preferably with one of the rear-view mirrors (B) of a motor vehicle (A), comprises a microwave unit which makes use of the Doppler effect to detect and indicate the presence of other vehicles (F) which are approaching and which may collide with the vehicle (A) on which the device is mounted.

FIG. 1

# A device for detecting relative movement between vehicles, mainly for preventing collisions

The present invention relates to devices for detecting relative movement between vehicles and, in particular, relates to a device for mounting on a vehicle to detect relative closing movements of other vehicles.

A first characteristic of the device according to the invention is that it includes electromagnetic-wave generating means and detecting means which can be mounted on a vehicle with at least one rear-view mirror and which provides a view of a first given spatial region behind the vehicle itself; the electromagnetic-wave generating means and detecting means being able to operate in at least one second given spatial region behind the vehicle and at least partially separate from the first spatial region.

A further characteristic of the device according to the invention is that it comprises:
- means for generating electromagnetic waves which can propagate towards other vehicles and can be reflected thereby towards the device,
- detector means intended to be struck by the reflected waves and sensitive to the Doppler shift undergone by the electromagnetic waves during their propagation; the shift having first and second directions when the other vehicles are moving closer or further away respectively, and
- discriminator means with associated warning means connected to the detector means and able to activate the warning means when the Doppler shift is in the first direction.

The electromagnetic-wave generator means preferably operate in the GHz range, for example 20-24 GHz.

The device according to the invention, in accordance with a known solution, makes use of the Doppler effect applied to a microwave movement detector. The system can distinguish the direction of a vehicle which might collide. Discrimination is necessary since the device is installed on a motor vehicle and moves relative to the road and to everything which is stationary or moving at a relatively slower speed.

In particular, it is arranged for the device to be operated differently during normal travel and in particular conditions of use, such as stoppage or reversing, so as to avoid undesirable signals being generated in these latter conditions. The choice of operation in the microwave range has been shown to be advantageous since it is possible safely to avoid the emission of false indications during movement very close to a row of motor vehicles parked along the sides of a street, or during passage of other vehicles coming in the opposite direction.

The invention will now be described, purely by way of non-limiting example, with reference to the appended drawings, in which:
Figure 1 shows a typical arrangement of mounting and of use of the device according to the invention, schematically and from above,
Figure 2 is a block schematic diagram of the circuit structure of the same device,
Figure 3 is a graph showing the operating criteria of the device according to the invention.

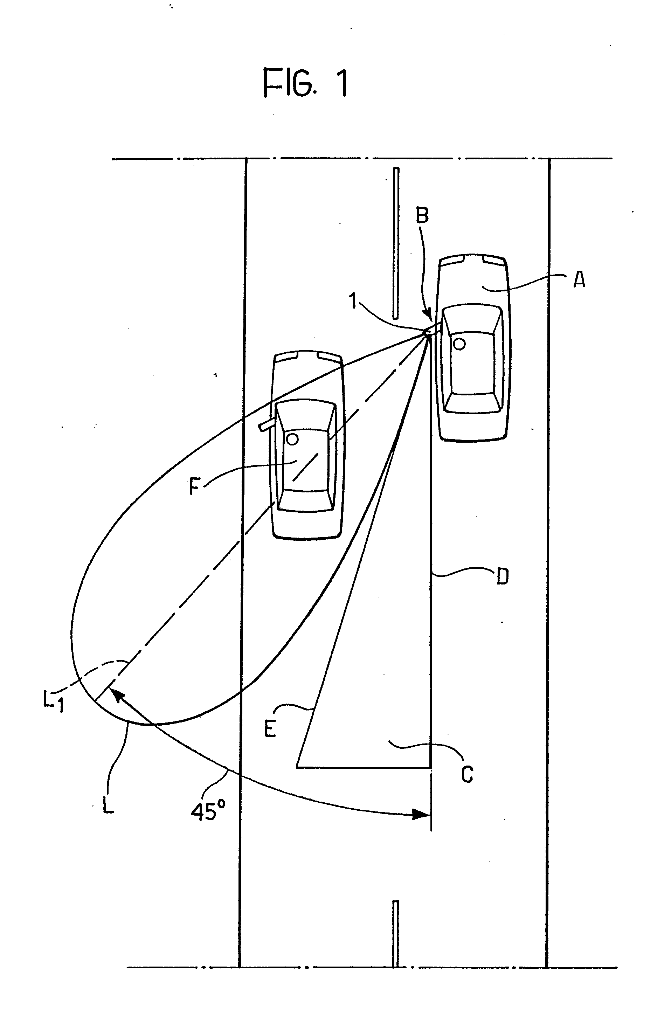

Figure 1 shows schematically how the rear-view mirrors normally mounted on motor vehicles are not able to provide the driver with a complete view of the underlying space.

In the example illustrated, a first motor car, indicated A, has a rear-view mirror B; this gives the driver a view of the space behind over an angular field C (the first spatial region) which extends rearwardly of the motor car A through a given angular amplitude (typically of the order of 18-20°) from the direction of travel D of the motor vehicle A up to a limit of observation line E. There is therefore a wide obscured or blind region which is not "covered" by the rear-view mirror B and which becomes wider the close it is to the vehicle A. The presence of this obscured or blind region means that another vehicle, such as a car F which is overtaking, is, in effect, invisible to the driver of the vehicle A through the rear-view mirror B. This can give rise to very dangerous travelling conditions, with risk of collision should the driver of the vehicle decide for any reason (for example the presence of an obstacle) to swerve sideways and to the left from his line of travel up to that time.

The device according to the invention is constituted essentially by an electromagnetic wave (microwave) sensor and acts, so to speak, like radar surveying a second spatial region behind the vehicle A, that is the blind or dead region not covered by the rear-view mirror B. The device is intended to provide corresponding information to the driver of the car A when another vehicle, such as the vehicle F of Figure 1, is in that region and moving closer to the car A. The device 1 according to the invention is therefore able to detect the direction of movement of the vehicle F which could come into collision with the vehicle A on which the device 1 is mounted. As already stated, this discrimination is necessary since the device 1 is mounted on a motor vehicle and itself moves relative to the road, to everything which is stationary (for example parked vehicles), to anything which is moving at a relatively slower speed and, naturally, to vehicles which are moving away from the vehicle A. These latter vehicles will certainly not give rise to a risk of collision with the motor vehicle A and an indication of their presence would therefore be distracting to the driver of the motor car A.

In general, the angular extent of the cover provided by the device 1 is defined by a main lobe having an aperture of the order of 10-60°, preferably 30-45°, oriented so that the axis $L_1$ of the main lobe L is at approximately 45° to the direction of movement D of the vehicle.

Naturally, although the positioning of the device 1 near the rear-view mirror can undoubtedly be advantageous (also from the possibility of integrating the device 1 with the rear-view mirror), other mounting arrangements are possible and, in particular, it may be positioned on other parts of the motor vehicle A, for example near its rear end.

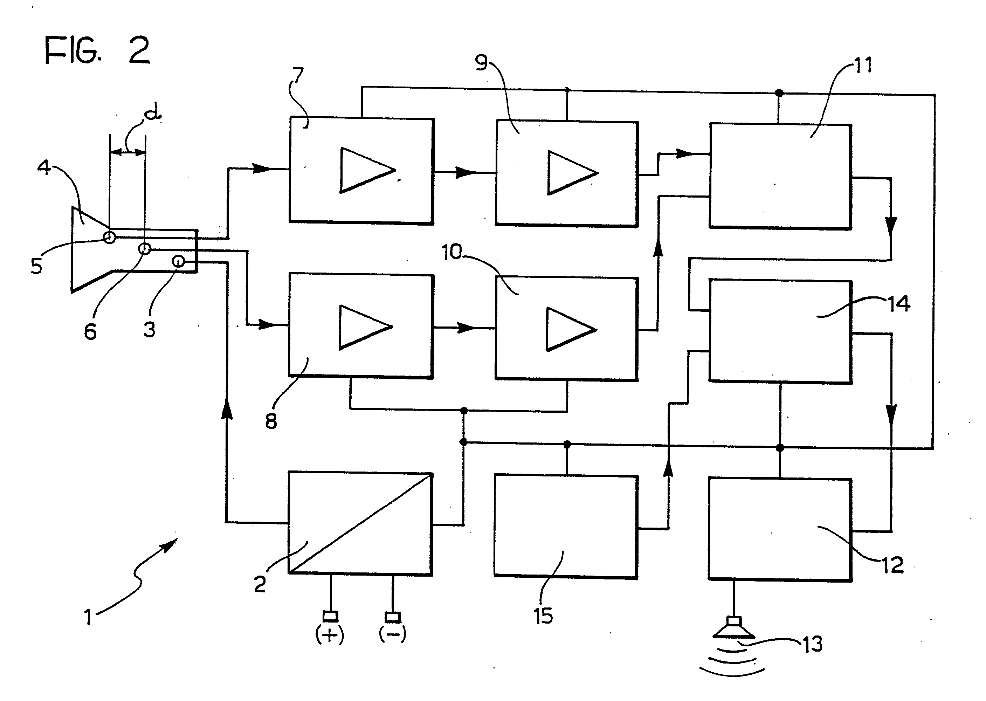

With reference to the block diagram of Figure 2, a supply unit is indicated 2 and, as well as providing a stabilised supply voltage (8 volts dc) to all the components of the device 1, it also provides a modulated supply to a microwave generator 3. The latter is preferably constituted by a Gunn diode mounted in a cavity which forms part of a trumpet wave-guide cavity unit 4 which faces outwardly of the device 1 so as to create the lobe L of Figure 1.

The Gunn diode 3 preferably operates at a frequency of the order of 2-24 GHz.

This selection is dictated by the need to minimise the dimensions of the unit 4 and of the device 1 as a whole whilst keeping the gain of the antenna high (for example 17 dB). It is important for the gain to be sufficient to keep the angular amplitude of the radiation lobe L contained. This is to prevent secondary lobes, which are inclined to the axis $L_1$ of the main lobe, from providing false indications. This may occur during movement very close to a row of motor vehicles parked at the side of the street, or during passage close to other vehicles travelling in the opposite direction.

Moreover, the supply 2 introduces a small ultra-sound-frequency ripple (for example 30-40 KHz) into the supply voltage of the Gunn diode 3. The fact that the supply to the microwave generator 3 is modulated prevents interference between two or more collision-prevention devices 1 according to the invention mounted on two vehicles which pass each other at a distance less than or equal to the range of the device.

Two microwave detectors indicated 5 and 6, preferably constituted by two Schottky diodes, are mounted within the unit 4 so as to be struck by the radiation emitted by the generator 3 and reflected by obstacles situated within the spatial region investigated ( lobe L)

The two detectors 5, 6 are separated by a distance d (measured in the direction of propagation of the radiation) which constitutes an odd multiple of a quarter of the wavelength $\lambda$ of the radiation emitted by the Gunn diode 5.

In other words $d = (2n + 1). \lambda/4$.

Since they are located within the unit 4, the two diodes 5, 6 are also struck by the radiation emitted directly by the Gunn diode so that the local frequency is available for mixing with and conversion of the reflected signals received.

The signals resulting from the detection of the reflected waves are sent to two respective amplifier blocks 7 and 8.

Their separation by a distance d which is an odd multiple of a quarter of the wavelength makes the detectors 5 and 6 sensitive to the Doppler shift undergone by the radiation emitted by the Gunn diode 3 as a result of its reflection from a moving obstacle.

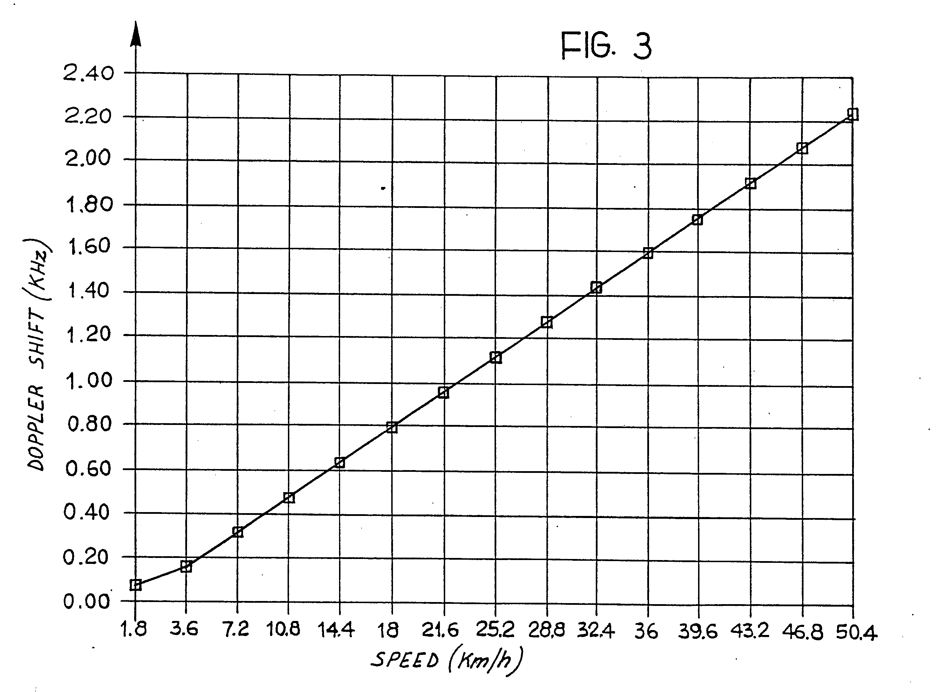

The amplitude of this shift is shown in KHz on the ordinate scale of the graph of Figure 3 as a function of the velocity of the device 1, and hence of the vehicle on which it is mounted, relative to other vehicles, which is shown on the abscissa in Km/hour.

The present invention is therefore based on the use of a Doppler-effect movement detector which operates as a transceiver. In fact there is a transmission section (the Gunn diode 3) which supplies high-frequency power (in the microwave range) and an antenna circuit such as to achieve impedance-matching between the generator and the medium in which the electromagnetic waves are propagated.

The receiver section also uses an antenna which is usually, but not necessarily, the same as that used by the transmitter. The Schottky diodes 5 and 6 are supplied with a portion of the signal emitted by the Gunn diode 3 and with the signal reflected from the environment. The beat frequency of these two signals of the same frequency is therefore zero. Only when an object of sufficient size moves into the irradiation lobe of the unit 4 is the frequency of the signal received shifted by the Doppler effect. In this case, the value of the frequency difference is other than zero. The frequency shift varies from a few tenths of a Hz to many kHz.

Because of regulations relating to the use of the electromagnetic spectrum as regards microwave detectors, the manufacturer has been obliged to set the transmitter frequency to a well-defined value. Clearly, under these conditions, two devices situated at a distance apart at least equal to the nominal range, could interfere with each other if the two transmission frequencies differed only slightly, that is from a few Hz to several KHz. In the present case, the frequency modulation of the transmission oscillator (the Gunn diode 3) with an ultrasound frequency prevents the beat frequency from occurring in the pass-band regions of the amplifiers 7 and 8 of the receiver section.

In general the two amplification channels 7 and 8 are formed so as to have a frequency response which enables the detection of velocities from a little less than 2 km/hour up to a maximum of 50 km/hour.

After being squared by passage through respective squaring circuits (triggers) 9, 10, the detection signals are applied to a phase-sensitive circuit (psd) 11 which acts as a discriminator for distinguishing the direction of the Doppler shift detected in the reflected waves.

As is known, the direction of the shift depends on the direction of movement of the device relative to the reflection source (in the specific case, other vehicles which are moving in the observation zone).

In general, the Doppler shift will be positive ( + $\Delta$ f) in the presence of a vehicle which is approaching and negative (- $\Delta$ f ) in the case of a vehicle moving away.

The phase detector 11 is formed so as to provide an output signal only when the phase shift indicates the presence of an approaching vehicle.

This signal can be used directly, through a relay 12, to switch on a warning device 13, such as an acoustic warning (a buzzer) mounted in the passenger compartment of the motor vehicle, so as to warn the driver of the dangerous situation.

In the embodiment of the invention which is currently preferred, the signal output by the phase detector 11 is applied to the relay 12 through an enabling unit 14 which is sensitive to a vehicle-speed signal taken from a tachometric sensor 15.

The latter sensor may be any sensor currently used in the most recent generation of vehicles for providing speed information to members, such as the automatic gear change or the vehicle's trip computer, or simply by any sensor which can provide an electrical signal indicative of the speed of movement of the vehicle.

The discriminator circuit 14 "senses" the tachometric signal provided by the sensor 15 and operates differently according to whether the vehicle A on which the device 1 is mounted is in a normal travelling condition or is in a particular condition (typically stationary or reversing).

Under normal travelling conditions (a tachometric signal positive), the indication, with the consequent activation of the warning device 13, is effected in the presence of Doppler-shifted signals indicative of approach speeds within a first given range, for example 2-50 km per hour.

Conversely, when the vehicle is stationary or reversing, (a zero or negative tachometric signal) the sensitivity threshold of the circuit 14 is raised, causing a signal to be sent to the relay 12 only in the presence of Doppler shifts corresponding to approach speeds in a second, narrower range, typically from 20 to 50 km per hour.

The first indication range, which is used under normal travelling conditions of the vehicle, therefore extends to lower speeds. The need for a second, narrower sensitivity range under conditions of stoppage or reversing, is dictated by the need to avoid the emission of unjustified signals under these conditions, for example when another vehicle is approaching the stationary vehicle slowly, or when the vehicle itself is reversing slowly towards a parked vehicle.

## Claims

1. A device for detecting relative movements between vehicles, characterised in that it includes electromagnetic-wave generating means (3) and detecting means (5, 6) which can be mounted on a vehicle with at least one rear-view mirror (B) and which provides a view of a first given spatial region (C) behind the vehicle (A); the electromagnetic wave generating means (3) and detecting means (5, 6) being able to operate in at least one second given spatial region (L) behind the vehicle and at least partially separate from the first spatial region (C).

2. A device for mounting on a vehicle (A) for detecting the relative closing movements of other vehicles (F), characterised in that it comprises:
- means (2, 3) for generating electromagnetic waves which can propagate towards the other vehicles (F) and can be reflected back thereby towards the device (1),
- detector means (5, 6) intended to be struck by the reflected waves and sensitive to the Doppler shift undergone by the electromagnetic waves during their propagation; the shift having first and second directions when the other vehicles(F) are moving closer and further away respectively,
- discriminator means (11) with associated warning means (12, 13) connected (7 to 10) to the detector means (5, 6) and able to activate the warning means (13) when the Doppler shift is in the first direction.

3. A device according to Claim 1 or Claim 2, characterised in that the generator means (3) generate electromagnetic waves in the GHz range.

4. A device according to Claim 3, characterised in that the generator means (3) generate electromagnetic waves in the 20-24 GHz range.

5. A device according to any one of Claims 1 to 4, characterised in that the generator means comprise a Gunn diode.

6. A device according to any one of the preceding claims, characterised in that it has a main operating lobe with an aperture of from 10 to 600, preferably 30°.

7. A device according to any one of Claims 1, 2 or 6, characterised in that it includes means for mounting it on the vehicle (A) at an angle of the order of 45° to the normal direction of travel (D) of the vehicle (A).

8. A device according to any one of the preceding claims, characterised in that it includes antenna means with a gain of the order of 17 dB in the operating range of the device.

9. A device according to any one of the preceding claims, characterised in that the electromagnetic waves have a given wavelength ($\lambda$) and the detector means comprise two sensitive elements (5, 6) separated from each other by a distance (d) which is an odd multiple (2n + 1) of a quarter of the said wavelength ($\lambda$).

10. A device according to any one of Claims 1, 2 or 9, characterised in that the detector means comprise two Schottky diodes arranged to be struck by the electromagentic waves produced by the generator means (3).

11. A device according to Claim 1 or Claim 2, characterised in that the generator means (3) carry associated modulator means (2) for the frequency modulation of the electromagnetic waves at a given frequency.

12. A device according to Claim 11, characterised in that the given frequency is an ultra-sound frequency.

13. A device according to Claim 1 or Claim 2, characterised in that it includes means (15) for sensing the movement of the vehicle (A) and which can identify at least one condition from the stationary condition and the reversing condition of the vehicle (A), in that the detector means (5 to 10) are sensitive to Doppler shifts corresponding to at least a first and a second range of speeds of the vehicle (A) relative to other vehicles (F), the first range being wider at its lower end than the second range and in that the sensitivity of the device is limited to said second range when the sensor means (15) indicate that the vehicle (A) is in at least one of the stationary condition and the reversing condition.

# FIG. 1

FIG. 2

EP 0 370 965 A2

FIG. 3